# EUROPEAN PATENT SPECIFICATION

(11) **EP 0 733 663 B1**
(45) Date of publication and mention of the grant of the patent: **22.12.1999**
(21) Application number: 96200642.5
(22) Date of filing: 08.03.1996
(51) Int. Cl.: C08G 67/02, B01J 31/16

(54) **Process for the copolymerization of carbon monoxide with an olefinically unsaturated compound**
Verfahren zur Copolymerisation von Kohlenmonoxid mit olefinisch ungesättigten Verbindungen
Procédé pour la copolymérisation de monoxide de carbone et de composés à insaturation oléfinique

(30) Priority: 22.03.1995 EP 95200715
(43) Date of publication of application: 25.09.1996
(73) Proprietor: SHELL INTERNATIONALE RESEARCH MAATSCHAPPIJ B.V., 2596 HR Den Haag (NL)
(72) Inventor: Baardman, Frank, NL-1031 CM Amsterdam (NL); Bradford, Arleen Marie, 2596 HR The Hague (NL); Jubb, Jayne, NL-1031 CM Amsterdam (NL); Scheerman, Pieter, NL-1031 CM Amsterdam (NL); Wijngaarden, Rudolf Jacobus, 2596 HR The Hague (NL)

(56) References cited:
- EP-A- 0 440 997
- EP-A- 0 619 335
- EP-A- 0 650 761
- NL-A- 9 001 229

## Description

This invention relates to a process for the copolymerization of carbon monoxide with an olefinically unsaturated compound.

EP-A-619335 discloses a process for the copolymerization of carbon monoxide with an olefinically unsaturated compound which comprises contacting the monomers with a catalyst composition based on a Group VIII metal and a hydrocarbylborane. This process is suitable for preparing linear copolymers of carbon monoxide with an olefinically unsaturated compound. The copolymers are in particular alternating copolymers or, in other words, copolymers in which the monomer units originating in carbon monoxide alternate with the monomer units originating in the olefinically unsaturated compound.

Applicant has experienced that the copolymerization process of EP-A-619335 has a major disadvantage in that it suffers from a rapid decay of the polymerization rate and deactivation of the catalyst. Within an hour the rate of polymerization has been seen to become unattractively low, such that residence times in excess of one hour do not contribute in a meaningful way to the economy of the process.

Applicant has attempted to reverse this situation, for example, by supplying additional Group VIII metal compound during the copolymerization and by applying various diluents, such as aliphatic hydrocarbons, ethers and liquid propene. The results were, however, not satisfactory.

It has now surprisingly been found that a substantial improvement with respect to the stability of the polymerization rate can be achieved by applying an aromatic diluent in combination with applying a stirring power above a certain minimum value. This finding is indeed unexpected because the use of an aromatic diluent constitutes a narrow selection from the large number of diluents which would - according to EP-A-619335 - be suitable for use in this copolymerization.

Thus, the present invention relates to a process for the copolymerization of carbon monoxide with an olefinically unsaturated compound comprising contacting the monomers in the presence of an aromatic liquid diluent containing at least 80% by volume of at least one aromatic compound selected from the group consisting of toluene, benzene, chlorobenzenes, xylenes, styrene and α-methylstyrene with a catalyst composition which is based on a source of a Group VIII metal and a hydrocarbylborane, and as an additional catalyst component a bidentate ligand of the general formula R¹R²M¹-R-M²R³R⁴ wherein M¹ and M² in independently represent a phosphorus, arsenic or antimony atom, R¹, R², R³ and R⁴ independently represent a non-substituted hydrocarbyl group, in particular of up to 10 carbon atoms, and R represents a bivalent organic bridging group containing at least 2 carbon atoms in the bridge, with application of a stirring power transmitted to the polymerization mixture in each reactor used of at least 0.25 kW/m³.

Because of the improved stability of the polymerization rate residence times exceeding 1 hour, in particular exceeding 1.5 hours, more in particular exceeding 3.5 hours, can be applied in a meaningful way. The invented process also allows for the preparation of a larger quantity of copolymer relative to the quantity of Group VIII metal employed. Further, EP-A-619355 recommends to apply a large excess of the hydrocarbylborane over the Group VIII metal, for example such that the molar ratio of boron/Group VIII metal is about 50:1. The present process may advantageously be carried out using a molar ratio of boron/Group VIII metal which is lower than the value recommended in EP-A-619335, for example less than 25:1. Thus, besides being attractive from an economic point of view, the invented process is also attractive in that the quantity of catalyst remnants in the prepared polymer can be lower, which is generally beneficial to polymer properties such as the melt stability.

In the present specification and claims the term "Group VIII metal" encompasses the noble metals ruthenium, rhodium, palladium, osmium, iridium and platinum, and the iron group metals iron, cobalt and nickel.

The catalyst composition suitable for use in the process of the invention is based on a source of cations of the said metal(s). Suitable sources of cations of metals of Group VIII include salts of mineral acids, such as salts of sulphuric acid, nitric acid and phosphoric acid, and salts of sulphonic acids, such as methanesulphonic acid and para-toluenesulphonic acid. Preferred sources are salts of carboxylic acids, in particular those having up to 6 carbon atoms, such as acetic acid, propionic acid and trifluoroacetic acid. If desired, as cation source use may be made of the metals in their elemental form, or in a zero-valent state thereof, e.g. in complex form, such as complexes wherein the Group VIII metal is covalently bonded to one or two hydrocarbyl groups. These covalently bonded hydrocarbyl groups may be aliphatic or aromatic and contain typically up to 12 carbon atoms. Preferred covalently bonded hydrocarbyl groups are aliphatic groups, in particular n-alkyl groups, such as methyl and n-butyl groups.

Catalyst compositions based on a noble Group VIII metal are preferred, those based on palladium being most preferred. A preferred source of palladium is palladium (II) acetate.

In addition to a Group VIII metal the catalyst composition contains a hydrocarbylborane. The hydrocarbylborane is typically defined by the general formula BXYZ wherein X, Y and Z denote independently a substituted or unsubstituted hydrocarbyl group, a hydroxy group, a substituted or unsubstituted hydrocarbyloxy group or a halogen atom, on the understanding that at least one of X, Y and Z denotes a substituted or unsubstituted hydrocarbyl group. The said hydrocarbyl groups and the hydrocarbyl groups of the hydrocarbyloxy groups may be aliphatic or aromatic groups, such groups typically having up to 12 carbon atoms. Preferred hydrocarbyl groups are aryl groups which may or may not be substituted. Preferred substituents of the hydrocarbyl groups are electron withdrawing groups or atoms, such as trihalomethyl groups, nitro groups and halogen atoms. Hydrocarbyl groups of which all hydrogen atoms are replaced by substituents are included in the term "hydrocarbyl group". The hydrocarbyl groups are in particular phenyl groups, more particularly perfluorophenyl or 3,5-bis(trifluoromethyl)phenyl groups. Examples of suitable aliphatic groups are ethyl, n-butyl and n-hexyl groups. Halogen atoms X, Y or Z are preferably fluorine. Examples of hydrocarbylboranes are phenyldifluoroborane, phenylboronic acid and hexylboronic acid. It is preferred that all three groups X, Y and Z are hydrocarbyl groups. Preferred hydrocarbylboranes are triphenylborane, tris(perfluorophenyl)borane and tris[3,5-bis(trifluoromethyl)phenyl]borane.

The quantity of hydrocarbylborane may be varied between wide limits. However, as indicated hereinbefore, it is a particular feature of this invention that the hydrocarbylborane may be used in a quantity such that the molar ratio of boron to the Group VIII metal is less than 25. More in particular this ratio is in the range of 0.1-20, preferably in the range of 0.5-15, more preferably in the range of 1-10.

It is advantageous to supply a part of the hydrocarbylborane during the polymerization in order to gain a further improvement in maintaining the polymerization rate at the initial level. For example, 40% or less, preferably 5-30%, of the hydrocarbylborane is supplied at the start of the polymerization and the remainder is supplied in a later stage, prior to work-up, in a continuous fashion or step wise.

The catalyst composition of the invented process is based, as an additional component, on a bidentate ligand which forms a complex with the Group VIII metal. It would appear that the presence of two complexing sites in one ligand molecule significantly contributes to the activity of the catalysts. A ligand containing at least two dentate groups is used which can complex with the Group VIII metal. The bidentate ligands can be indicated by the general formula

R¹R²M¹-R-M²R³R⁴ (I)

In this formula M¹ and M² independently represent a phosphorus, arsenic or antimony atom, R¹, R², R³ and R⁴ independently represent a non-substituted hydrocarbyl group, in particular of up to 10 carbon atoms, and R represents a bivalent organic bridging group containing at least 2 carbon atoms in the bridge.

In the ligands of formula (I) M¹ and M² preferably represent phosphorus atoms. R¹, R², R³ and R⁴ may independently represent alkyl, aryl, alkaryl, aralkyl or cycloalkyl groups. Preferably at least one of R¹, R², R³ and R⁴ represents an aromatic group.

In the ligands of formula (I), R preferably represents a bivalent organic bridging group containing from 2 to 4 bridging atoms, at least two of which are carbon atoms. Examples of such groups R are -CH₂-CH₂-, -CH₂-CH₂-CH₂-, and -CH₂-CH₂-CH₂-CH₂-. Preferably R is a trimethylene group.

The amount of bidentate ligand supplied may vary considerably, but is usually dependent on the amount of metal of Group VIII, present in the catalyst composition. Preferred amounts of bidentate ligands are in the range of 0.5 to 8, preferably in the range of 0.5 to 2 moles per gram atom of metal of Group VIII.

The performance of the catalyst composition may be improved by incorporating therein an organic oxidant promoter, such as a quinone. Preferred promoters are selected from the group consisting of benzoquinone, naphthoquinone and anthraquinone. The amount of promoter is advantageously in the range of 1-50, preferably in the range of 1 to 10 mole per gram atom of metal of Group VIII.

The amount of catalyst used in the process of the invention may vary between wide limits. As indicated hereinbefore it is advantageous to employ the least quantity of catalyst composition as possible in relation to the quantity of copolymer to be prepared. Recommended quantities of catalyst composition are in the range of 10⁻⁸ to 10⁻², calculated as gram atoms of metal of Group VIII per mole of olefinically unsaturated compound to be copolymerized with carbon monoxide. Preferred quantities are in the range of 10⁻⁷ to 10⁻³ on the same basis.

It is advantageous to carry out the copolymerization process in the presence of a protic compound. An advantage of using a protic compound resides in a further improvement in maintaining the polymerization rate at the initial level. Examples of protic compounds are acids (such as sulphonic acids, carboxylic acids and adducts of boric acid and glycols or salicylic acids), alcohols and water. They have typically 15 or fewer carbon atoms, if any. Preferred acids are those having a pKa of less than 6, more preferably less than 4 and in particular less than 2, when measured in aqueous solution at 18 °C. Preferred protic compounds are alcohols, such as primary, secondary and tertiary aliphatic alcohols and phenols. They may be mono-alcohols or polyols, such as glycols. Preferred alcohols are the lower alcohols, normally understood to be the mono-alcohols which are completely miscible with water, in particular methanol and ethanol. The quantity of the protic compound employed may vary between wide ranges. Eligible quantities of the acids are in the range of 0.5-200, in particular in the range of 1.0 to 50, more in particular in the range of 1.0-10 equivalents per gram atom of Group VIII metal. When the protic compound is an alcohol, in particular a lower alcohol, it may be incorporated in the aromatic diluent, for example in a quantity up to 20% by volume, in particular 1-10% by volume, relative to the total volume of the diluent.

Olefinically unsaturated compounds which can be used as monomers in the copolymerization process of the invention, include compounds consisting exclusively of carbon and hydrogen and compounds which in addition comprise hetero atoms, such as unsaturated esters. Unsaturated hydrocarbons are preferred. Examples of suitable monomers are lower olefins, i.e. olefins containing from 2 to 6 carbon atoms, such as ethene, propene and butene-1, cyclic olefins such as cyclopentene, aromatic compounds, such as styrene and α-methylstyrene and vinyl esters, such as vinyl acetate and vinyl propionate. Preference is given to ethene and mixtures of ethene with another α-olefin, such as propene or butene-1.

Generally, the molar ratio of on the one hand carbon monoxide and on the other hand the olefinically unsaturated compound(s) is selected in the range of 1:5 to 5:1. Preferably the molar ratio is in the range of 1:1.5 to 1.5:1, substantially equimolar ratios being preferred most.

The copolymerization process of this invention is carried out in the presence of an aromatic liquid diluent containing typically at least 80% by volume, in particular 90% by volume of at least one aromatic compound selected from toluene, benzene, chlorobenzene, xylenes styrene and α-methylstyrene, typically characterized by a boiling point of not more than 200 °C, preferably not more than 150 °C. The aromatic liquid diluent may contain other diluents such as ketones (e.g. acetone), chlorinated aliphatic hydrocarbons (e.g. chloroform or dichloromethane) and, as indicated hereinbefore, protic diluents such as lower alcohols (e.g. methanol and ethanol).

When the process of this invention yields a copolymer in the form of a suspension in the aromatic diluent it is advantageous to have a solid particulate material suspended in the aromatic liquid diluent before the monomers are contacted with the catalyst composition. This embodiment of the process is advantageous in that it provides a further improvement in maintaining the polymerization rate at the initial level. In this embodiment the catalyst is preferably used as a solution in the diluent. Alternatively it may be advantageous that a catalyst is used which is deposited on the solid particulate material or, otherwise, which is chemically bound to the solid particulate material. Catalysts of the latter type are known in the art, for example from EP-A-511713, EP-A-404228 and EP-A-619334.

Typically a copolymer of carbon monoxide and an olefinically unsaturated compound is used as the solid particulate material, in particular a copolymer which is based on the same monomers as the copolymer to be prepared. The latter means that, for example, when a linear alternating copolymer of carbon monoxide and ethene will be prepared a linear alternating copolymer of carbon monoxide and ethene from an earlier polymer preparation will be suspended in the diluent. Other suitable solid particulate materials may be inorganic or organic materials, such as silica, alumina, talc, soot and polymers, for example polyethene, polypropene and polystyrene.

The solid particulate material is suitably used in a quantity of 0.1-20 %w, relative to the weight of the diluent, more suitably in a quantity of 0.5-10 %w. The bulk density of the solid particulate material is typically in the range of 50-1000 kg/m³, in particular in the range of 100-500 kg/m³. The solid particulate material has typically an average particle size of 10⁻⁶-10⁻³ m, in particular 10⁻⁶-5x10⁻⁴ m. The average particle size is determined as follows. With the aid of a commercially available particle size analyser, a cumulative weight distribution of a representative sample of the solid particulate material is determined as a function of the particle size. The cumulative weight distribution function is converted into a cumulative surface area distribution function, as described by Terence Allen in Particle Size Measurement (Chapman and Hall, London, 1981), p. 122 ff. The average particle size is found as the median of the cumulative surface area distribution function.

The copolymerization process of this invention is carried out with application of a stirring power transmitted to the polymerization mixture in each reactor used of at least 0.25 kW/m³, in particular at least 0.5 kW/m³. When the stirring power applied is less than 0.25 kW/m³ there is a depletion of monomer, in particular of carbon monoxide, in the liquid phase which causes a decay of the rate of copolymerization. A stirring power of at least 0.25 kW/m³ improves this situation. When a diluent is used in which the copolymer to be prepared forms a suspension it is advantageous to apply a stirring power of at least 0.5 kW/m³, in particular at least 1.0 kW/m³. A practicable maximum of the power density is 20 kW/m³. A preferred range of the power density is from 1.5 to 15 kW/m³. The stirring power may be transmitted to the polymerization mixture by any suitable means, for example, a stirring device, a jet mixer or a gas stream.

The copolymerization process is usually carried out at a temperature in the range of 20 to 200 °C, preferably at a temperature in the range of 30 to 150 °C. The reaction is conveniently performed at a pressure in the range of 2 to 200 bar, pressures in the range of 20 to 100 bar being preferred. The process is typically carried out at a scale at which the quantity of liquid diluent exceeds 10 kg. The process may be carried out as a batch process or as a continuous process. In the latter case it is advantageous to apply two or more reactors connected in series, because this increases the quantity of polymer which can be prepared within a given period of time using a certain reaction volume and a certain quantity of catalyst.

The copolymers obtained according to the invention are suitable as thermoplastics for fibres, films or sheets, or for injection moulding, compression moulding and blowing applications. They may be used for applications in the car industry, for the manufacture of packaging materials for food and drinks and for various uses in the domestic sphere.

The invention will be illustrated by the following examples. The diluents were analytical grade chemicals, which were used as purchased.

### EXAMPLE 1 (for comparison)

A copolymer of carbon monoxide with ethene and propene was prepared as follows.

Tris(perfluorophenyl)borane (0.247 g, 0.48 mmoles) was weighed in air into a dried Schlenk tube and dissolved in 100 ml dichloromethane. The solution was transferred to a 300 ml autoclave equipped with baffles and an inclined blade stirrer. Subsequently 25 g propene was added. The autoclave was pressurised to 30 bar with premixed carbon monoxide and ethene (1:1 molar ratio). The stirring power applied was about 3 kW/m³. The autoclave was heated to 70 °C. L₂Pd(CH₃CO₂)₂ (0.0154 g, 0.025 mmoles), wherein L₂ denotes 1,3-bis(diphenylphosphino)propane, taken up in 10 ml dichloromethane was injected into the autoclave. The autoclave was pressurised with the carbon monoxide/ethene mixture to 50 bar and maintained at that pressure for 1 hour by supplying additional carbon monoxide/ethene mixture. The pressure was released and the autoclave was allowed to cool to room temperature.

The polymer product was recovered by filtration, washed with dichloromethane and dried.

Polymerization rates, expressed in kg copolymer/(g palladium.hour), were calculated from the rate of addition of the carbon monoxide/ethene mixture. The initial polymerization rate, the rate after 1 hour, i.e. prior to the release of pressure, and the rate decay are indicated in the Table.

### EXAMPLES 2 - 6

A copolymer of carbon monoxide with ethene and propene was prepared following the procedures outlined in Example 1, but using instead of dichloromethane one of the following diluents: toluene, n-heptane, chlorotrifluoromethane, 1,4-dioxane and liquid propene. In the case of liquid propene, the L₂Pd(CH₃CO₂)₂, wherein L₂ denotes 1,3-bis(diphenylphosphino)propane, was taken up in heptane.

The results are given in the Table.

**TABLE**

| Example | Diluent | Polymerization rate (kg/g Pd.h) | | Decay % |
|---|---|---|---|---|
| | | Initial | After 1 hour | |
| 1 | dichloromethane a) | 10.7 | 1.0 | 90 |
| 2 | toluene | 8.0 | 3.2 | 60 |
| 3 | n-heptane a) | 0.1 | 0.0 | 100 |
| 4 | chlorotrifluoromethane a)- | b) | b) | c) |
| 5 | 1,4-dioxane a) | b) | b) | c) |
| 6 | liquid propene a) | b) | b) | c) |
| a) for comparison | | | | |
| b) polymerization rate negligible | | | | |
| c) not determined | | | | |

### EXAMPLE 7 (for comparison)

A copolymer of carbon monoxide with ethene and propene was prepared following the procedures outlined in Example 1, with the differences that the copolymerization was not terminated after 1 hour, and that after one hour additional L₂Pd(CH₃CO₂)₂ (0.028 g, 0.047 mmoles), wherein L₂ denotes 1,3-bis(diphenylphosphino)propane, dissolved in 20 ml dichloromethane was injected into the autoclave. At the moment of the injection of additional L₂Pd(CH₃CO₂)₂ the polymerization rate was 0.1 kg copolymer/(g palladium.hour).

During the hour subsequent to the injection of additional L₂Pd(CH₃CO₂)₂ no increase, but only a further decrease of the polymerization rate was detected.

## Claims

1. A process for the copolymerization of carbon monoxide with an olefinically unsaturated compound comprising contacting the monomers in the presence of an aromatic liquid diluent containing at least 80% by volume of at least one aromatic compound selected from the group consisting of toluene, benzene, chlorobenzenes, xylenes, styrene and α-methylstyrene with a catalyst composition which is based on a source of a Group VIII metal and a hydrocarbylborane and as an additional catalyst component a bidentate ligand of the general formula
R¹R²M¹-R-M²R³R⁴ (I)
wherein M¹ and M² independently represent a phosphorus, arsenic or antimony atom, R¹, R², R³ and R⁴ independently represent a non-substituted hydrocarbyl group, in particular of up to 10 carbon atoms, and R represents a bivalent organic bridging group containing at least 2 carbon atoms in the bridge with a stirring power transmitted to the polymerization mixture in each reactor used of at least 0.25 kW/m³.

2. A process as claimed in claim 1, characterized in that the Group VIII metal is palladium and that the hydrocarbylborane is defined by the general formula BXYZ wherein X, Y and Z denote independently substituted or unsubstituted hydrocarbyl groups, preferably aryl groups.

3. A process as claimed in claim 1 or 2, characterized in that the hydrocarbylborane is used in a quantity such that the molar ratio of boron to the Group VIII metal is less than 25, in particular in the range of 0.1-20.

4. A process as claimed in any of claims 1-3, characterized in that the olefinically unsaturated compound is ethene or a mixture of ethene with another α-olefin, such as propene or butene-1, the molar ratio of carbon monoxide and the olefinically unsaturated compound(s) is in the range of 1:5 to 5:1, preferably 1:1.5 to 1.5:1, the quantity of catalyst composition is in the range of 10⁻⁸ to 10⁻², calculated as gram atoms of metal of Group VIII per mole of olefinically unsaturated compound to be copolymerized, preferably in the range of 10⁻⁷ to 10⁻³ on the same basis, a temperature is selected in the range of 20 and 200 °C, preferably in the range of 30 and 150 °C, and a pressure is selected in the range of 2 and 200 bar, preferably in the range of 20 to 100 bar.

5. A process as claimed in any of claims 1-4, characterized in that the stirring power transmitted to the polymerization mixture is at least 0.5 kW/m³.

6. A process as claimed in any of claims 1-5, characterized in that the copolymer to be prepared forms a suspension in the aromatic liquid diluent and that the stirring power transmitted to the polymerization mixture is at least 0.5 kW/m³, in particular at least 1.0 kW/m³, preferably in the range of from 1.5 to 15 kW/m³.

## Patentansprüche

1. Verfahren zur Copolymerisation von Kohlenmonoxid mit einer olefinisch ungesättigten Verbindung, umfassend ein Inkontaktbringen der Monomere in Gegenwart eines aromatischen flüssigen Verdünnungsmittels, das wenigstens 80 Vol.-% wenigstens einer aromatischen Verbindung, ausgewählt aus der aus Toluol, Benzol, Chlorbenzolen, Xylolen, Styrol und α-Methylstyrol bestehenden Gruppe, enthält, mit einer Katalysatorzusammensetzung auf der Basis einer Quelle eines Gruppe VIII-Metalles und eines Hydrocarbylborans und, als einer weiteren Katalysatorkomponente, eines Bidentatliganden der allgemeinen Formel R¹R²M¹-R-M²R³R⁴, worin M¹ und M² unabhängig voneinander ein Phosphor-, Arsen- oder Antimonatom darstellen, R¹, R², R³ und R⁴ unabhängig voneinander eine unsubstituierte Hydrocarbylgruppe, insbesondere mit bis zu 10 Kohlenstoffatomen, bedeuten und R eine zweiwertige organische Brückengruppe darstellt, die wenigstens 2 Kohlenstoffatome in der Brücke enthält, unter Anwendung einer auf das Polymerisationsgemisch in jedem verwendeten Reaktor übertragenen Rührleistung von wenigstens 0,25 kW/m³.

2. Verfahren nach Anspruch 1, dadurch gekennzeichnet, daß das Gruppe VIII-Metall Palladium ist und daß das Hydrocarbylboran durch die allgemeine Formel BXYZ definiert ist, worin X, Y und Z unabhängig voneinander substituierte oder unsubstituierte Hydrocarbylgruppen, vorzugsweise Arylgruppen bedeuten.

3. Verfahren nach Anspruch 1 oder 2, dadurch gekennzeichnet, daß das Hydrocarbylboran in einer solchen Menge verwendet wird, daß das Molverhältnis von Bor zum Gruppe VIII-Metall kleiner als 25 ist, insbesondere im Bereich von 0,1-20 liegt.

4. Verfahren nach einem der Ansprüche 1 bis 3, dadurch gekennzeichnet, daß die olefinisch ungesättigte Verbindung Ethen oder ein Gemisch aus Ethen mit einem weiteren α-Ole Ethen oder ein Gemisch aus Ethen mit einem weiteren α-Olefin, wie Propen oder Buten-1, ist, das Molverhältnis von Kohlenmonoxid zu der olefinisch ungesättigten Verbindung bzw. zu den olefinisch ungesättigten Verbindungen im Bereich von 1:5 bis 5:1, vorzugsweise 1:1,5 bis 1,5:1 liegt, die Menge der Katalysatorzusammensetzung im Bereich von 10⁻⁸ bis 10⁻², berechnet als Grammatom Gruppe VIII-Metall pro Mol olefinisch ungesättigter Verbindung, die copolymerisiert werden soll, liegt, vorzugsweise im Bereich von 10⁻⁷ bis 10⁻³, auf die gleiche Basis bezogen, eine Temperatur im Bereich von 20 bis 200°C, vorzugsweise im Bereich von 30 bis 150 °C, ausgewählt wird und ein Druck im Bereich von 2 bis 200 bar, vorzugsweise im Bereich von 20 bis 100 bar, ausgewählt wird.

5. Verfahren nach einem der Ansprüche 1 bis 4, dadurch gekennzeichnet, daß die auf das Polymerisationsgemisch übertragene Rührleistung wenigstens 0,5 kW/m³ beträgt.

6. Verfahren nach einem der Ansprüche 1 bis 5, dadurch gekennzeichnet, daß das herzustellende Copolymer in dem aromatischen flüssigen Verdünnungsmittel eine Suspension ausbildet und daß die auf das Polymerisationsgemisch übertragene Rührleistung wenigstens 0,5 kW/m³, insbesondere wenigstens 1,0 kW/m³, vorzugsweise von 1,5 bis 15 kW/m³ beträgt.

## Revendications

1. Procédé pour la copolymérisation de monoxyde de carbone avec un composé oléfiniquement insaturé comprenant la mise en contact des monomères en présence d'un diluant liquide aromatique contenant au moins 80 % en volume d'au moins un composé aromatique choisi dans le groupe comprenant le toluène, le benzène, les chlorobenzènes, les xylènes, le styrène et l'a-méthylstyrène avec une composition de catalyseur qui est à base d'une source d'un métal du Groupe VIII et d'un hydrocarbylborane et comme composant de catalyseur additionnel un ligand bidenté de la formule générale
R¹R²M¹-R-M² R³R⁴ (I)
dans laquelle M¹ et M² représentent indépendamment un atome de phosphore, d'arsenic ou d'antimoine, R¹, R², R³ et R⁴ représentent indépendamment un groupe hydrocarbyle non substitué, en particulier jusqu'à 10 atomes de carbone, et R représente un groupe de pontage organique bivalent contenant au moins 2 atomes de carbone dans le pont, avec une puissance d'agitation transmise au mélange de polymérisation dans chaque réacteur utilisé d'au moins 0,25 kW/m³.

2. Procédé suivant la revendication 1, caractérisé en ce que le métal du Groupe VIII est le palladium et en ce que l'hydrocarbylborane est défini par la formule générale BXYZ, dans laquelle X, Y et Z représentent indépendamment des groupes hydrocarbyle substitués ou non substitués, avantageusement des groupes aryle.

3. Procédé suivant l'une ou l'autre des revendications 1 et 2, caractérisé en ce que l'hydrocarbylborane est utilisé en une quantité telle que le rapport molaire du bore au métal du Groupe VIII est inférieur à 25, en particulier dans la gamme de 0,1-20.

4. Procédé suivant l'une quelconque des revendications 1 à 3, caractérisé en ce le composé oléfiniquement insaturé est l'éthène ou un mélange d'éthène avec une autre α-oléfine, telle que le propène ou le butène-1, le rapport molaire du monoxyde de carbone et du ou des composés oléfiniquement insaturés se situe dans la gamme de 1/5 à 5/1, avantageusement de 1/1,5 à 1,5/1, la quantité de composition de catalyseur se situe dans la gamme de 10⁻⁸ à 10⁻², calculée en atome-gramme de métal du Groupe VIII par mole de composé oléfiniquement insaturé à copolymériser, avantageusement dans la gamme de 10⁻⁷ à 10⁻³ sur la même base, une température est choisie dans l'intervalle de 20 à 200°C, avantageusement dans l'intervalle de 30 à 150°C, et une pression est choisie dans la gamme de 2 à 200 bars, avantageusement dans la gamme de 20 à 100 bars.

5. Procédé suivant l'une quelconque des revendications 1 à 4, caractérisé en ce que la puissance d'agitation transmise au mélange de polymérisation est d'au moins 0,5 kW/m³.

6. Procédé suivant l'une quelconque des revendications 1 à 5, caractérisé en ce que le copolymère à préparer forme une suspension dans le diluant liquide aromatique et en ce que la puissance d'agitation transmise au mélange de polymérisation est d'au moins 0,5 kW/m³, en particulier d'au moins 1,0 kW/m³, avantageusement dans la gamme de 1,5 à 15 kW/m³.
